# EUROPEAN PATENT APPLICATION

(11) **EP 2 124 181 A1**
(43) Date of publication of application: **25.11.2009**
(21) Application number: 08711497.1
(22) Date of filing: 18.02.2008
(51) Int. Cl.: G06Q 30/00, G06Q 10/00

(54) **DATA PROCESSING SYSTEM AND DATA PROCESSING METHOD**

(30) Priority: 13.03.2007 JP 2007063876
(71) Applicant: Sony Corporation, Tokyo 108-0075 (JP)
(72) Inventor: SUGAYA, Hiroshi, Tokyo 108-0075 (JP); YAEGASHI, Akira, Tokyo 108-0075 (JP); HAKOISHI, Takahisa, Tokyo 108-0075 (JP)
(74) Representative: DeVile, Jonathan Mark
(86) International application number: PCT/JP2008/052673
(87) International publication number: WO 2008/111366

(57) **Abstract**

Advertisement video data in which coupon ID data attached to each of coupons is embedded as a watermark is distributed and reproduced; part of the video data provided by a display device (30) is captured by an image pickup section (41) of a mobile phone device (40), and the coupon ID data is extracted from the captured advertisement video data; the extracted coupon ID data is stored into a secure memory (48) that holds terminal ID data; the coupon ID data and the terminal ID data transmitted from the mobile phone device (40) are received; and a log in effect when each coupon related to the coupon ID data is identified and redeemed is transmitted to a coupon management device (60) whereby the terminal ID data and the redemption logs are managed in relation to the coupon ID data by the coupon management device (60). This makes it possible efficiently to distribute the coupons using the advertising media and to measure the effects of advertisement based on coupon use status.

## Description

### Technical Field

The present invention relates to a data processing system and a data processing method for efficiently distributing coupons using advertising media and for measuring the effects of advertisement based on coupon use status.

### Background Art

Systems such as those of click-guaranteed advertisement on the Internet allow the effects of advertisement to be measured. By contrast, the systems of measuring the effects of advertisement have yet to make their way into broadcast-type distribution systems such as television broadcasts and digital signage. At present, in order to measure the effects of measurement, ways are devised to display two-dimensional bar codes or additional information such as telephone numbers and URLs (Uniform Resource Locator) on advertising media including posters and advertisement videos, or to distribute electronic coupons or the like at the same time that advertisement contents are delivered. However, embedding the additional information in advertisement contents may shorten the time period in which to reproduce video advertisements or may otherwise degrade the quality of the advertisement contents. And where the additional information such as electronic coupons is distributed independently as digital data at the same time that contents are delivered, dedicated reception terminals are needed as receivers to acquire the electronic coupons. This will limit users.

In any case, where coupons are distributed, it is necessary to prevent unlawful uses such as illicit copying or falsification of the coupons.

Meanwhile, this applicant proposed in Japanese Patent Laid-open No. 2006-331398 some techniques as related art related to the present application.

### Disclosure of Invention

The present invention has been made in view of the above circumstances, and one object of the invention is to provide a data processing system and a data processing method capable of efficiently distributing coupons using advertising media and of measuring the effects of advertisement based on coupon use status.

Another object of the present invention is to provide a data processing system and a data processing method capable of preventing illicit uses of coupons when these coupons are distributed.

A data processing system according to the present invention includes: advertising media for providing advertisement data in which coupon ID data attached to each of coupons is embedded as a watermark; a terminal device including acquisition means for acquiring the advertisement data provided by the advertising media, extraction means for extracting the coupon ID data from the advertisement data acquired by the acquisition means, secure storage means for storing terminal ID data as well as the coupon ID data extracted by the extraction means, terminal-side communication means for transmitting the coupon ID data and the terminal ID data held in the secure storage means, and terminal-side noncontact communication means for transmitting the coupon ID data and the terminal ID data held in the secure storage means; a redemption device including redemption-side noncontact communication means for receiving the coupon ID data and the terminal ID data transmitted from the terminal-side non-contact communication means of the terminal device, and redemption-side communication means for transmitting a log in effect when any of the coupons related to the coupon ID data is redeemed, whereby the coupons related to the coupon ID data are redeemed; and a coupon management device including management means for managing the coupons in relation to the coupon ID data, and management-side communication means for receiving the redemption logs transmitted from the redemption device so as to manage the received logs using the management means.

Meanwhile, a data processing method according to the present invention includes the steps of: using advertising media to provide advertisement data in which coupon ID data attached to each of coupons is embedded as a watermark; causing a terminal device to acquire the advertisement data provided by the advertising media, to extract the coupon ID data from the acquired advertisement data, and to store the extracted coupon ID data into secure storage means which holds terminal ID data; receiving the coupon ID data and the terminal ID data transmitted from the terminal device, identifying the coupons related to the coupon ID data, and transmitting to a coupon management device a log in effect when any of the coupons related to the coupon ID data is redeemed; and causing the coupon management device to manage the terminal ID data and the redemption logs in relation to the coupon ID data.

### Advantageous Effects

According to the present invention, advertisement data in which coupon ID data is embedded is provided, so that ordinary media such as display devices and the like may be utilized as advertising media. And the extracted coupon ID data is stored into the secure storage means that holds the terminal ID data, so that unlawful copying and distribution of the coupon ID data can be prevented. Furthermore, redemption logs are managed in relation to the coupon ID data, which makes it possible to identify the attributes of advertisement viewers and thereby to implement a highly reliable method for measuring the effects of advertisement.

### Brief Description of Drawings

[FIG. 1]

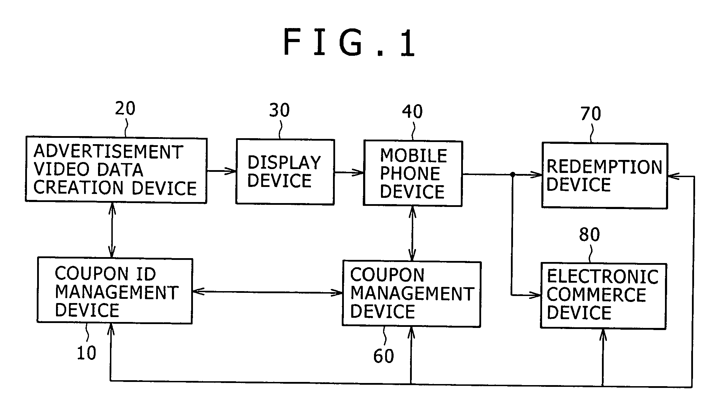

   FIG. 1 is a view showing a structure of a data processing system to which the present invention is applied.
[FIG. 2]

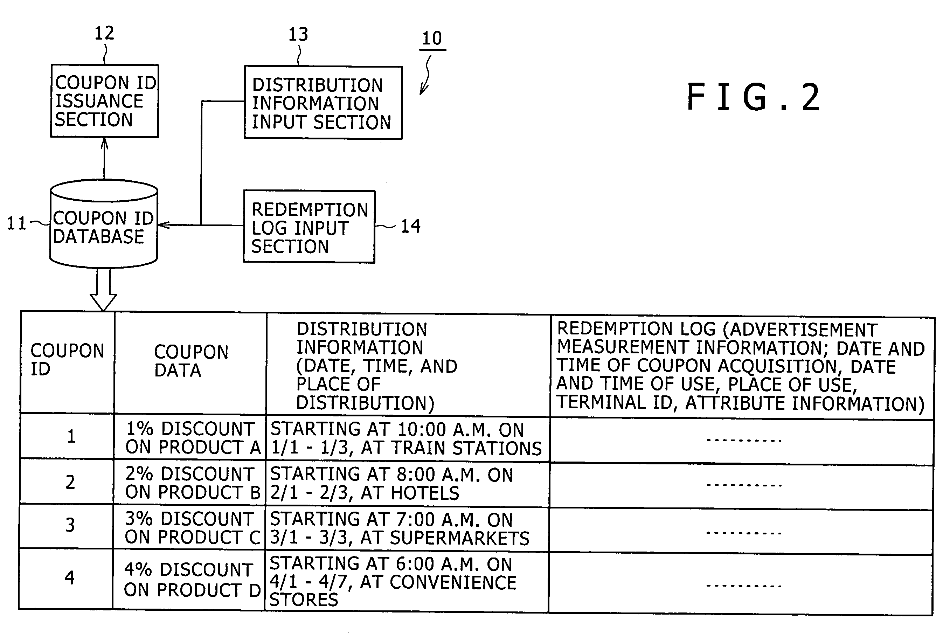

   FIG. 2 is a block diagram of a coupon ID management device used by the data processing system to which the present invention is applied.
[FIG. 3]

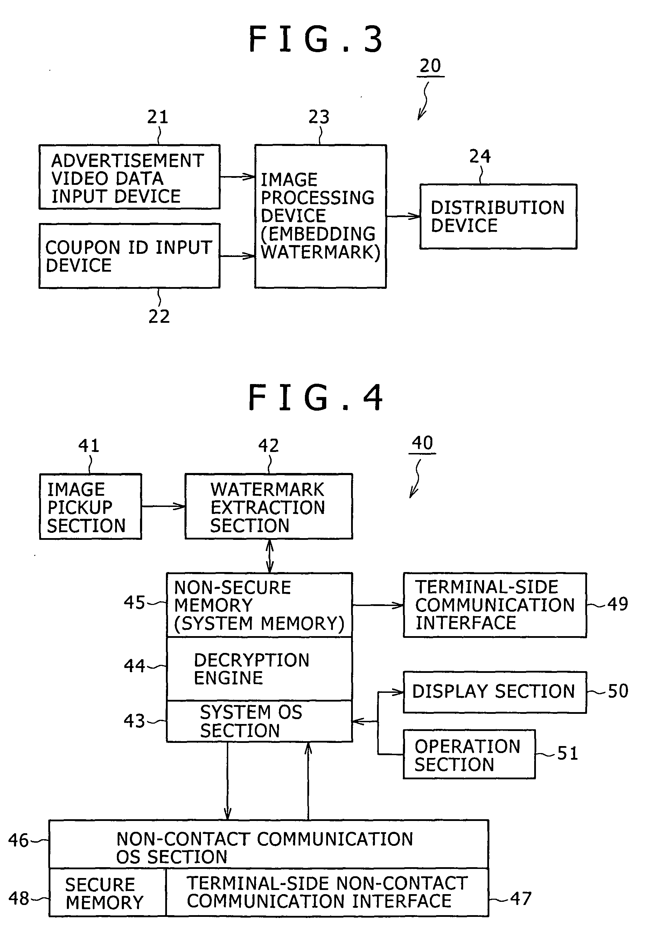

   FIG. 3 is a block diagram of an advertisement video data creation device used by the data processing system to which the present invention is applied.
[FIG. 4]
   FIG. 4 is a block diagram of a mobile phone device used by the data processing system to which the present invention is applied.
[FIG. 5]

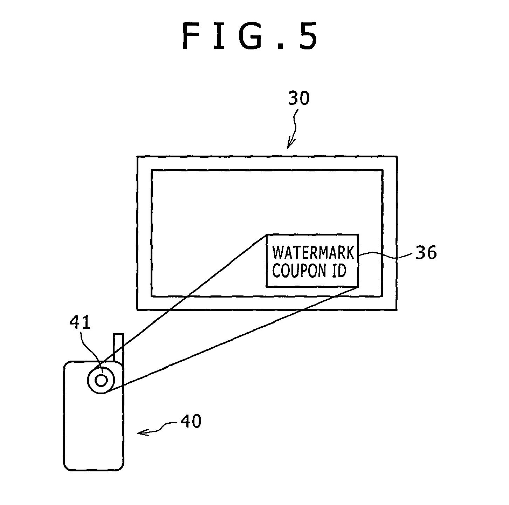

   FIG. 5 is a view showing how coupon ID data is acquired by the mobile phone device capturing advertisement video data displayed on a display device.
[FIG. 6]

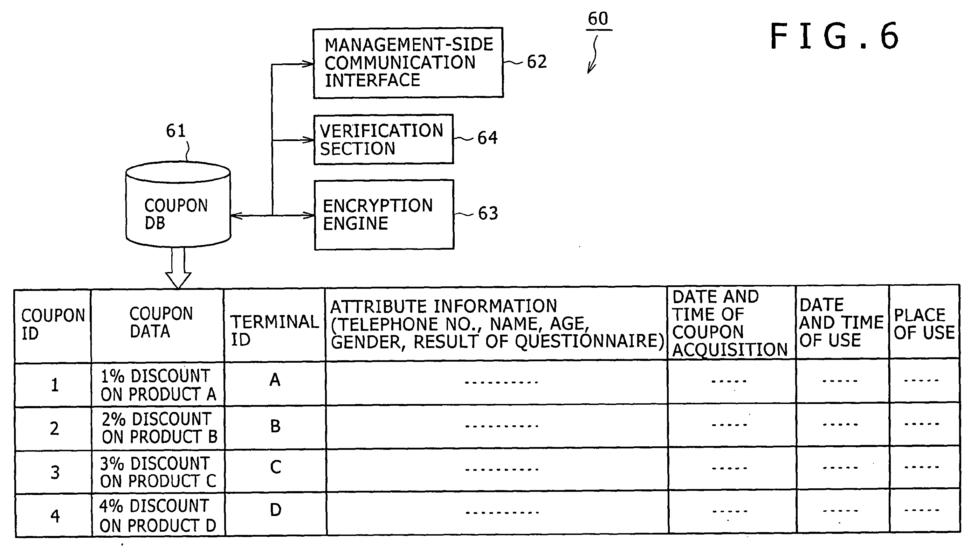

   FIG. 6 is a block diagram of a coupon management device used by the data processing system to which the present invention is applied.
[FIG. 7]

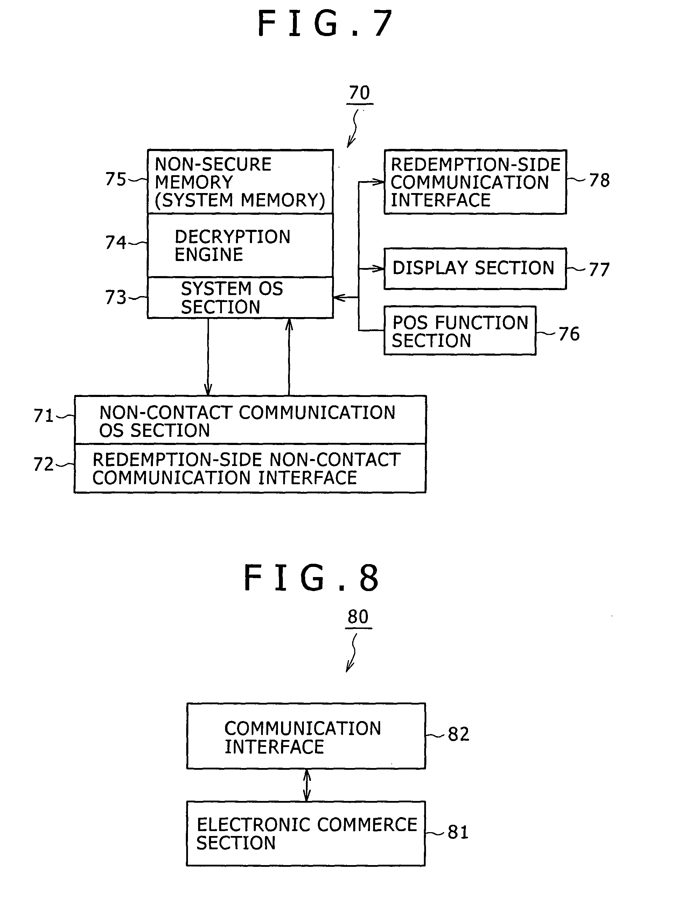

   FIG. 7 is a block diagram of a redemption device used by the data processing system to which the present invention is applied.
[FIG. 8]
   FIG. 8 is a block diagram of an electronic commerce device used by the data processing system to which the present invention is applied.
[FIG. 9]

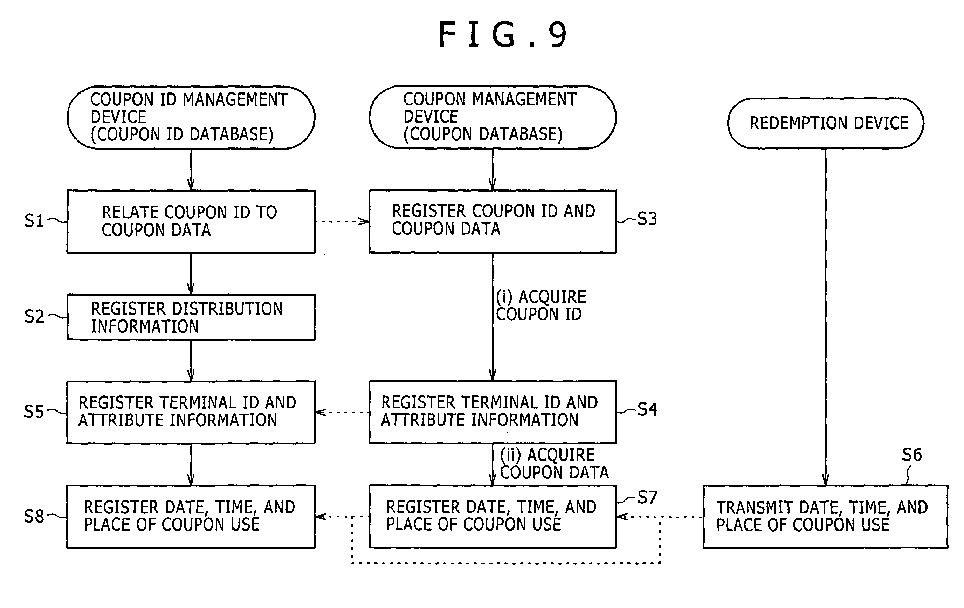

   FIG. 9 is a flowchart showing a procedure of the data processing system to which the present invention is applied.
[FIG. 10]

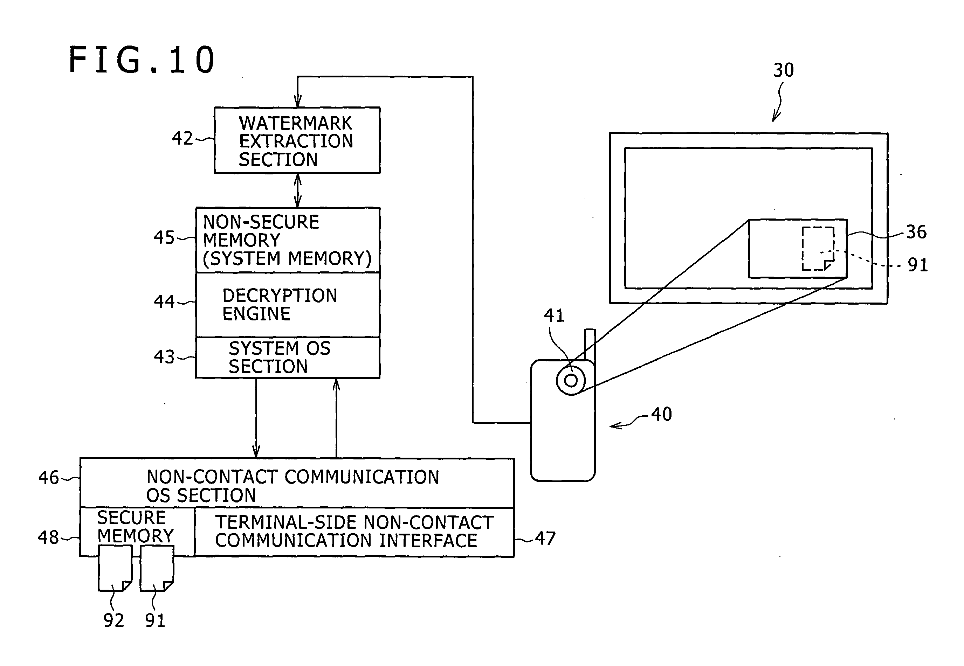

   FIG. 10 is a view showing a process by which the mobile phone device acquires the coupon ID data from the advertisement video data displayed on the display device as part of the data processing system to which the present invention is applied.
[FIG. 11]

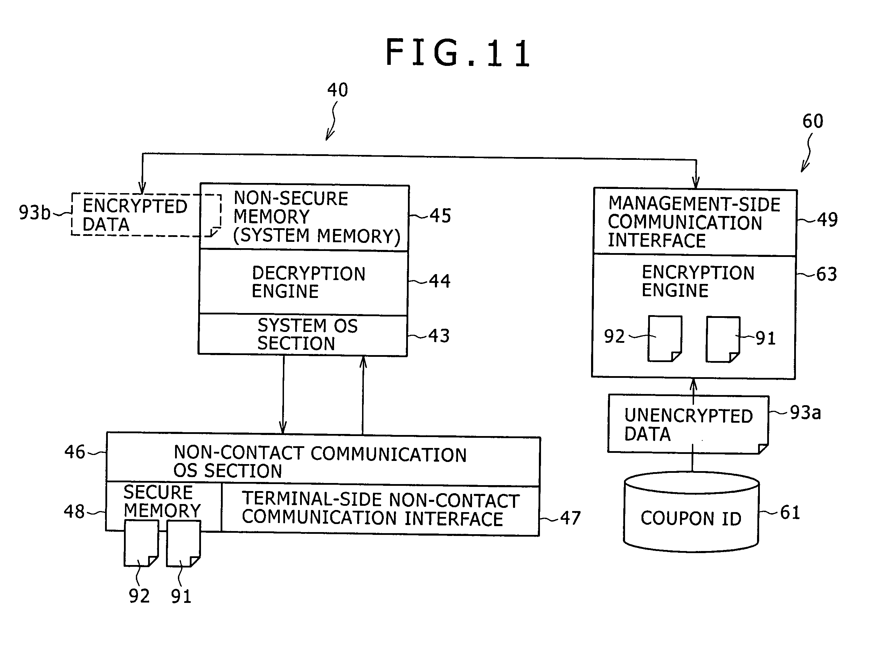

   FIG. 11 is a view showing a process by which the mobile phone device acquires encrypted coupon data as part of the data processing system to which the present invention is applied.
[FIG. 12]

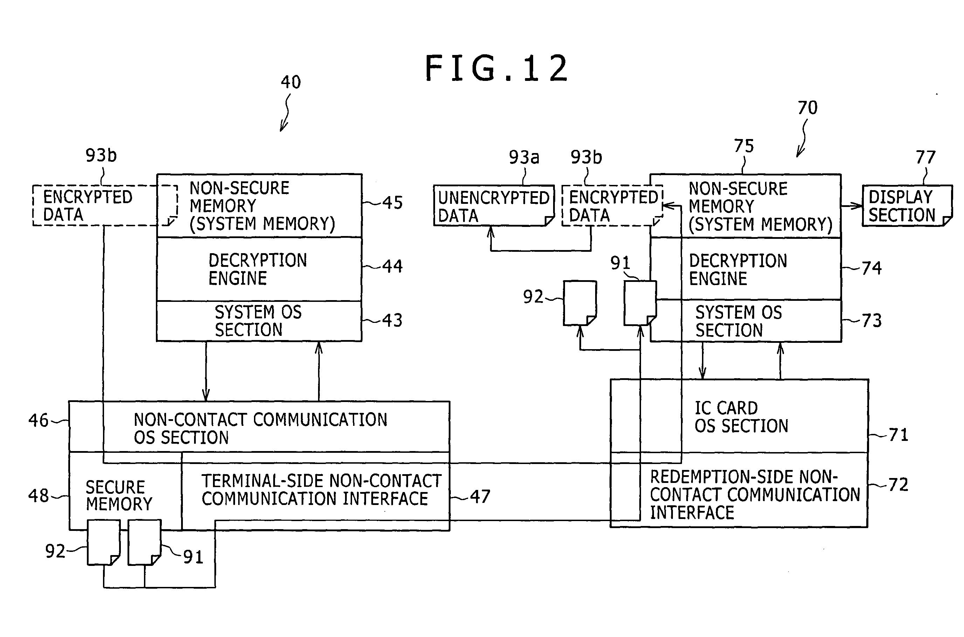

   FIG. 12 is a view showing the process of a first example of redemption in which a user having acquired a coupon data 93 uses the coupon as part of the data processing system to which the present invention is applied.
[FIG. 13]

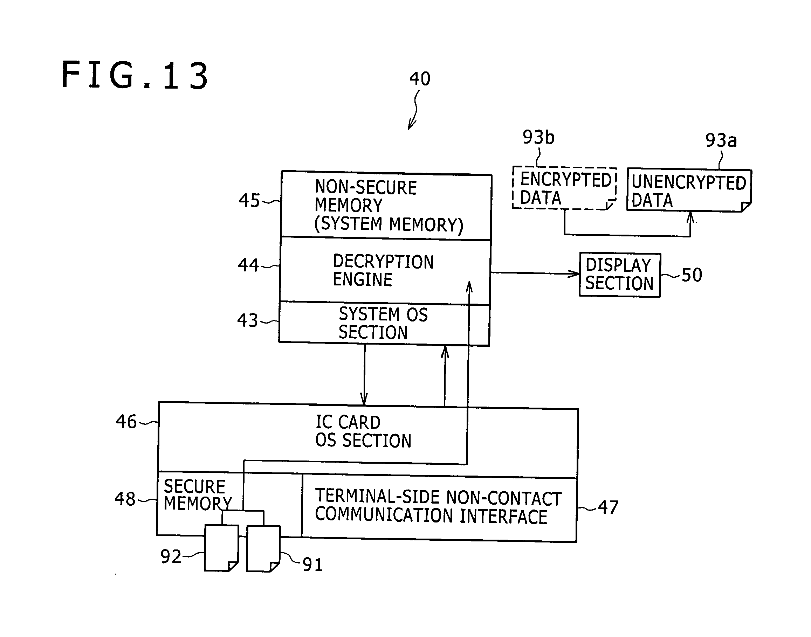

   FIG. 13 is a view showing the process of a second example of redemption in which the user having acquired the coupon data 93 uses the coupon as part of the data processing system to which the present invention is applied.
[FIG. 14]

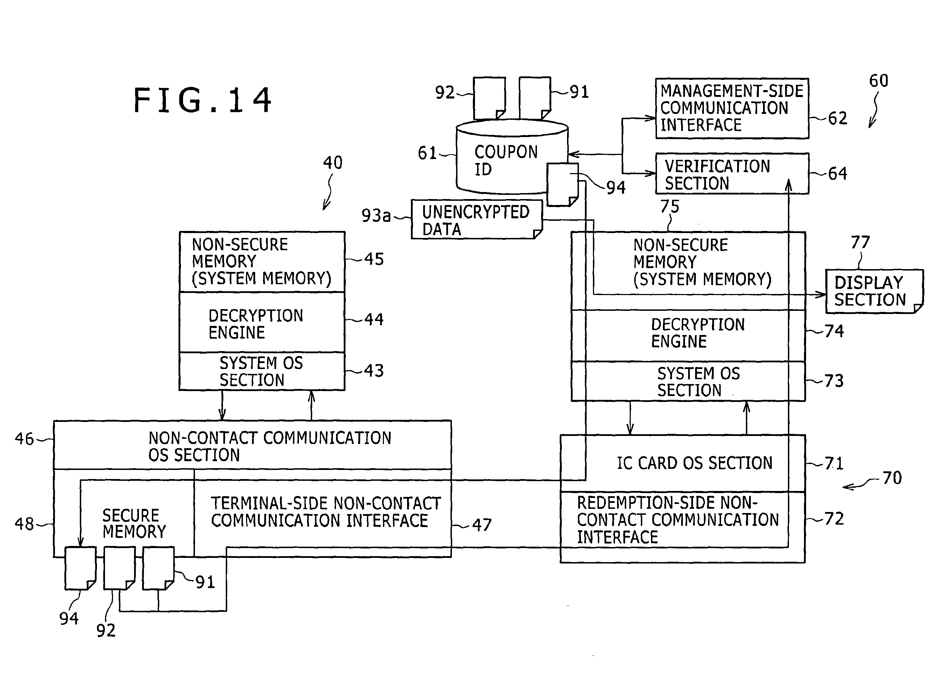

   FIG. 14 is a view showing the process of a third example of redemption in which the user having acquired the coupon data 93 uses the coupon as part of the data processing system to which the present invention is applied.
[FIG. 15]

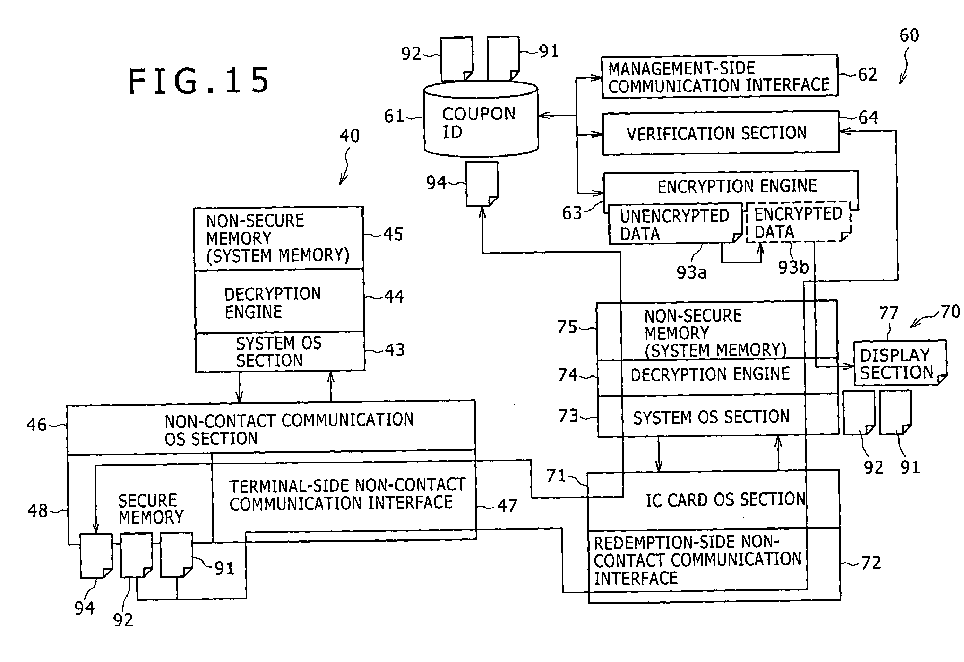

   FIG. 15 is a view showing the process of a fourth example of redemption in which the user having acquired the coupon data 93 uses the coupon as part of the data processing system to which the present invention is applied.
[FIG. 16]

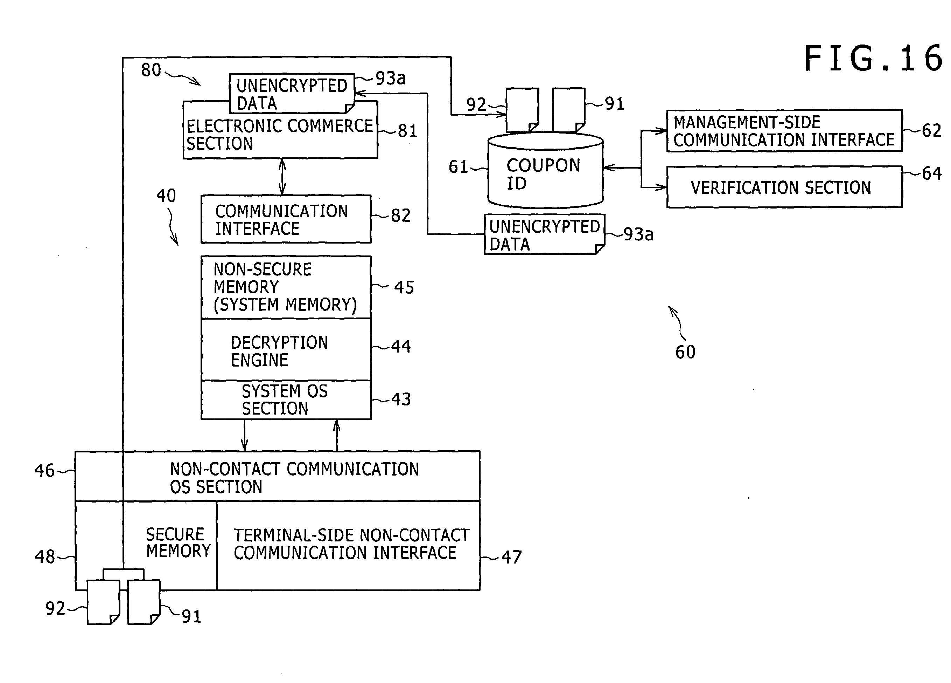

   FIG. 16 is a view showing the process of a fifth example of redemption in which the user having acquired the coupon data 93 uses the coupon as part of the data processing system to which the present invention is applied.

### Best Mode for Carrying Out the Invention

As shown in FIG. 1, a data processing system 1 to which the present invention is applied is a system that distributes coupons of an advertiser using systems of advertisement video distribution. The data processing system 1 includes a coupon ID management device 10 that manages coupon ID data for identifying the coupons issued by the system 1, an advertisement video data creation device 20 that distributes advertisement video data in which the issued coupon ID data is embedded as a watermark, a display device 30 that reproduces and displays the advertisement video data in which the watermark is embedded, a mobile phone device 40 which is owned by a user viewing the advertisement video on the display device 30 and which extracts the watermark from the advertisement video data, a coupon management device 60 that manages the issued coupon data, a redemption device 70 that redeems the coupon acquired by the user, and an electronic commerce device 80 that supports electronic commerce whereby the user purchases products on the Internet or the like.

The coupon ID management device 10 issuing the coupon ID data is made up of a computer such as an ordinary server device and managed illustratively by an advertising agency. As shown in FIG. 2, the coupon ID management device 10 includes a coupon ID database (DB) 11 typically composed of a large-capacity hard disk on which is established a database relating issued coupon ID data to coupon data, a coupon ID issuance section 12 that issues coupon ID data, a distribution information input section 13 that admits from the coupon ID management device 10 or from the advertisement video data creation device 20 distribution information about the advertisement video data in which coupon ID data is embedded as a watermark, and a redemption log input section 14 that admits a redemption log given when the coupon data is redeemed by the coupon management device 60 or by the redemption device 70.

The coupon ID database established on the coupon ID database (DB) 11 stores the issued coupon ID data in relation to the coupon data defined in terms of product discounts and other specifics, the distribution information including the dates and times at which advertisement video data was distributed, and the redemption logs including the dates and places of coupon acquisition by users, dates and times of coupon use by the users, places of coupon use by the users, and user attribute information.

Meanwhile, the distribution information is information that is input from the distribution information input section 13 after the coupon ID data has been issued. The distribution information input section 13 admits distribution schedule data defined by the advertisement video data creation device 20 as the distribution information over the network. The distribution information thus input is stored onto the coupon ID database in relation to the coupon ID data.

Further, the redemption logs are information which includes the dates and times of coupon acquisition by users, places of coupon acquisition by users, dates and times of coupon use by the users, places of coupon use by the users, and user attribute information. A redemption log is information that is input from the redemption log input section 14 when a coupon has been used by a user, i.e., when a coupon is redeemed. The redemption log input section 14 admits redemption logs transmitted over the network by the coupon management device 60 or by the redemption device 70 periodically or as needed. The input redemption logs are stored in relation to the coupon ID data. Illustratively, the dates, times and places of coupon acquisition by users and the users' attribute information are input from the coupon management device 60; the dates, times and places of coupon use by the users are input from the redemption device 70.

As described, by resorting to the coupon data, distribution information, and redemption logs stored in relation to the coupon ID data on the database, it is possible to find when and where the issued coupons were acquired and used. The findings provide information that may be offered to the advertiser as advertisement measurement information indicative of the effects of advertisement.

Upon issuance of the coupons to be distributed using advertisement video data, the coupon ID issuance section 12 attaches coupon ID data to the coupon data of each coupon so that the distribution information and redemption logs involved may be managed in relation to the coupon ID data on the above-mentioned database. When the coupon ID data is issued in relation to the coupon data of the issued coupons, the coupon ID data and the coupon data are related to one another before they are supplied to a coupon database of the coupon management device 60 over the network or through recording media so that the coupon management device 60 may verify the coupon ID data.

Here, according to the present invention, only the coupon ID data is distributed to prevent unlawful use. In addition, the size of the data to be handled is reduced so that the amount of the data to be processed by the mobile phone device 40, redemption device 70, etc., may be limited. The coupon ID data issued by the coupon ID issuance section 12 is then supplied to the advertisement video data creation section 20 over the network or through recording media.

As shown in FIG. 3, the advertisement video data creation device 20 is a device which is managed by an advertising agency, a TV station or the like and which includes an advertisement video data input device 21 that admits advertisement video data provided by advertisers or by the advertising agency, a coupon ID input device 22 that admits the coupon ID data supplied by the coupon ID management device 10, an image processing device 23 that embeds the coupon ID data in the advertisement video data as a watermark, and a distribution device 24 that distributes the advertisement video data in which the coupon ID data is embedded.

The advertisement video data input device 21 is illustratively a recording medium reproduction device such as a VTR, a DVD (Digital Versatile Disc) player or the like. As such, the advertisement video data input device 21 reproduces advertisement video data from recording media such as magnetic tapes or DVDs delivered by the advertiser or by the advertising agency, and supplies the reproduced data to the image processing device 23.

The coupon ID input device 22 is made up of a USB Universal Serial Bus) memory reader, a memory card reader or the like. As such, the coupon ID input device 22 supplies the image processing device 23 with the coupon ID data which is read from the USB memory, memory card or the like provided by the coupon ID management device 10 or which has been supplied over the network.

The image processing device 23 is an encoding device that performs compression encoding suitable illustratively for digital television broadcasts or for Internet distribution. Through a series of steps of compressing encoding, the image processing device 23 embeds the coupon ID data as a watermark in the advertisement video data. For example, where the advertisement video data coming from the advertisement video data input device 21 is encoded using the MPEG (Moving Picture Coding Experts Group/Moving Picture Experts Group)-2 or MPEG-4 standard, the image processing device 23 adds error-correcting code to the coupon ID data from the coupon ID input device 22 using the high-frequency component of the so-called DCT (Discrete Cosine Transform) coefficient obtained at the time of encoding, and embeds the coupon ID data furnished with the error-correcting code as the watermark.

Alternatively, if the video content of advertisement is distributed uncompressed as digital signals, the coupon ID data is embedded in a manner dispersed in the space domain, in each sampled value of the video signals making up the advertisement video content, i.e., in the least significant bit or in a few bits down to the least significant bit of each of the pixels involved.

Also, the position in the frame in which to embed the coupon ID data is in one or a plurality of suitably located so-called macro blocks for easy reproduction of the coupon ID data. If the number of bytes in the coupon ID data is large, then a plurality of macro blocks nearby are used. And illustratively, in order to extract the coupon ID data embedded as a watermark, a frame is provided for alignment of the domain where the coupon ID data is embedded. Furthermore, in consideration of the display to be captured by the mobile phone device 40, the coupon ID data is embedded in a plurality of positions inside the frame. The number of frames in which to embed the coupon ID data, i.e., the length (of time) of advertisement, may span the entire advertisement. However, since there are cases where a plurality of products are advertised in a single advertisement, the coupon ID data should preferably be embedded in the frame in which the product in question is displayed.

The coupon ID data thus embedded in the frequency domain or in the space domain remains invisible to the end user.

Meanwhile, where advertisement video data is in analog form, the image processing device 23 converts the coupon ID data into an image signal, i.e., creates graphic images of numerals and symbols constituting the coupon ID data, and places these graphic images in unobtrusive positions such as at the bottom or in a corner of the frame so as to overlay or superimpose the images in the advertisement video signal. The overlaid or superimposed coupon ID data is visible to the user. The advertisement video data in this case may alternatively be in digital form.

The advertisement video data for distribution, in which the coupon ID data is embedded as described above by the image processing device 23, is forwarded to the distribution device 24. The distribution device 24 may illustratively be a transmission device for digital television broadcasts, for analog television broadcasts or for satellite broadcasts; or a computer or a server furnished with a modem for the Internet, with a LAN card for the Ethernet or with a wireless LAN card and connected to the Internet. Also, the distribution device 24 is a device that records video signals to recording media such as VTRs, CD recorders and DVD recorders. And the distribution device 24 supplies the display device 30 with the advertisement video data for distribution in which the coupon ID data is embedded in a manner suitable for distribution through transmission media such as broadcasts or distribution over the Internet or by use of recording media.

The display device 30 shown in FIG. 1 is any one of large and small display devices set up in public spaces, outdoors, at train stations, or in shops. Illustratively, the advertisement video data embedded with the coupon ID data distributed by the distribution device 24 is received by the display device 30 and stored onto its internal hard disk for reproduction and display according to designated schedules.

For the data processing system 1 above, the user is a person who views the advertisement video data being reproduced by the display device 30 when passing nearby. The user who owns or manages the mobile phone device 30 can acquire the coupon ID data from the advertisement video data being displayed on the display device 30.

More specifically, as opposed to the functionality of ordinary mobile phones, the mobile phone device 40 has the capability to extract a watermark as shown in FIG. 4. The mobile phone device 40 includes an image pickup section 41 for taking images of an object and a watermark extraction section 42 for extracting the watermark from the image data captured by the image pickup section 41.

The image pickup section 41 contains a plurality of lenses and pickup devices such as CCD (Charge-Coupled Devices) element or CMOS (Complementary Metal-Oxide Semiconductor). The image pickup section 41 performs predetermined image processing and A/D conversion processing before storing the captured image data into a non-secure memory 45.

Also, where the advertisement video data displayed on the display device 30 is to be captured while an application for capturing advertisement video data is being activated on the display device 30, a particular domain of the advertisement video data where the coupon ID data is embedded is captured by the image pickup section 41. The captured data is compression-encoded using the JPEG (Joint Photographic Expert Group) standard or the like before being stored into the non-secure memory 45. As described, where advertisement video data is to be acquired by the image pickup section 41 acting as acquisition means, the image pickup section 41 takes an image of the inside of a frame 36 for alignment of the advertisement video data displayed on the display device 30, i.e., the domain in which the coupon ID data is embedded as a watermark, as shown in FIG. 5.

When the application for capturing advertisement video data is being activated on the display device 30 and when the advertisement video data displayed on the display device 30 is captured, the watermark extraction section 42 extracts from the captured image data the coupon ID data embedded as the watermark.

More specifically, the watermark extraction section 42 aligns the captured picture data with respect to the captured frame 36 by correcting size, inclination, and distortion from slantwise picture-taking and by aligning the macro block where the coupon ID data was embedded by the image processing device 23 in the advertisement video data upon encoding, with the macro block of the picture data captured by the image pickup section 41, before extracting the coupon ID data from the high-frequency component of the so-called DCT coefficient obtained upon encoding and further carrying out error correction processing, whereby the coupon ID data is extracted.

Also, when the video content of advertisement is distributed uncompressed as a digital signal, the above-mentioned frame 36 is used to perform correction processing for alignment. Thereafter, each sampled value of the picture signal, i.e., the least significant bit or a few bits down to the least significant bit of each of the pixels involved are extracted, and error correction processing is carried out, whereby the coupon ID data is extracted.

Furthermore, where the advertisement video data is in analog form, a graphic picture composed of numerals and symbols constituting overlaid or superimposed coupon ID data is extracted through a character recognition process. The coupon ID data is then extracted from the extracted graphic picture.

Also, the mobile phone device 40 includes a system OS section 43 that manages the device as a whole, a decryption engine 44 that decrypts distributed coupon data that has been encrypted, and the non-secure memory 45 that doubles as a system memory.

The system OS section 43 managing the device as a whole illustratively allows an operation section 51 to transmit a call request signal corresponding to a telephone number through a terminal-side communication interface 49, and transmits the coupon ID data extracted by the watermark extraction 42 along with the terminal ID data held in a secure memory 48, to be discussed later, through the terminal-side communication interface 49 to the coupon management device 60 in order to acquire coupon data. And the non-secure memory 45 is basically a non-rewritable memory that stores the picture data captured by the image pickup section 41 as well as the coupon data in encrypted form corresponding to the coupon ID data transmitted from the coupon management device 60. The decryption engine 44 decrypts the encrypted coupon data transmitted from the coupon management device 60 through the terminal-side communication interface 49, using the coupon ID data extracted by the watermark extraction section 42 and the terminal ID data held in the secure memory 48.

Furthermore, the mobile phone device 40 includes a non-contact communication OS section 46 as the means for conducting short or near distance non-contact communications such as RFID (Radio Frequency Identification System) or NFC (Near Field Communication), a terminal-side non-contact communication interface 47 that communicates with the non-contact communication interface of the redemption device 70, and the secure memory 48 that stores the terminal ID data as identification data unique to the mobile phone device 40. That is, the mobile phone device 40 uses the non-contact communication OS section 46, terminal-side non-contact communication interface 47, and secure memory 48 to implement the functionality of the IC card utilized by electronic money systems or the like.

In addition to holding the terminal ID data unique to the mobile phone device 40, the secure memory 48 stores points credited to the user as well as electronic money data. The secure memory 48 also stores the coupon ID data extracted by the watermark extraction section 42. The secure memory 48 thus stores the above-described data of high value and is designed to prevent falsification or unlawful copying of such high-value data.

Although the secure memory 48 here has a limited capacity and thus accommodates small-size data such as terminal ID data and coupon ID data, the secure memory 48 may alternatively store coupon data if provided with a larger capacity. The data held in the secure memory 48 is output through the terminal-side noncontact communication interface 47; the data is also read out to the system OS section 43 and transmitted through the terminal-side communication interface 49.

The mobile phone device 40 further includes the terminal-side communication interface 49 made of an antenna or the like for receiving radio waves, a display section 50 typically formed by an LED panel or an organic EL panel for displaying operation status or the like, and an operation section 51 typically constituted by pushbuttons, slide switches and the like for inputting operation signals. Operating the operation section 51 enables the mobile phone device 40 to communicate with the opposite party or to start up the image pickup section 41 as described above in order to capture advertisement video data or to extract coupon ID data from the captured advertisement video data. The mobile phone device 40 can decrypt the encrypted coupon data held in the non-secure memory 45 using the terminal ID data and coupon ID data held in the secure memory 48 so as to display unencrypted coupon data on the display section 50. Also, when the coupon ID data is transmitted to the coupon management device 60 to acquire the encrypted coupon data, the operation section 51 may be operated to input the telephone number, user name, age, gender, and questionnaire information making up the attribute information to be sent to the coupon management device 60 together with the coupon ID data.

According to the present invention, the mobile phone device 40 may alternatively be a small-size information processing terminal such as a PDA (Personal Digital Assistant).

The coupon management device 60 to be accessed by the above-described mobile phone 40 for coupon data acquisition includes a coupon ID database 61 composed of a large-capacity hard disk or the like on which is formed a coupon database for managing coupon ID data and coupon data in relation to one another, a management-side communication interface 62 that communicates with the terminal-side communication interface 49 of the mobile phone device 40, an encryption engine 63 that encrypts coupon data using coupon ID data and terminal ID data, and a verification section 64 that verifies the coupon ID data transmitted from the mobile phone device 40 against the coupon ID data supplied from the coupon ID management device 10, as shown in FIG. 6.

The coupon database formed on the coupon ID database 61 stores the coupon data defined in terms of product discounts and other specifics, the terminal ID data of the mobile phone device 40; attribute information such as the telephone number of the mobile phone device 40, user name, age, results of a questionnaire, and mail address; and dates, times and places of coupon data acquisition, in relation to the coupon ID data supplied from the coupon ID management device 10. This type of coupon database is preinstalled, furnished with the coupon ID data and coupon data supplied from the coupon ID management device 10. When the mobile phone device 40 transmits the coupon ID data and terminal ID data, the coupon database stores the terminal ID data and attribute information in relation to the coupon ID data, and also stores the date and time at which the coupon data encrypted using the coupon ID data and terminal ID data was transmitted to the mobile phone device 40, as the date and time of coupon acquisition.

When a coupon is redeemed, the coupon database receives the coupon ID data and terminal ID data from the redemption device 70 and, based on the date and time of reception and on the'ID data about the place where the redemption device 70 is set up, registers the received data as the date, time, and place of coupon use.

When the coupon ID data and terminal ID data are transmitted from the mobile phone device 40 for acquisition of coupon data, the encryption engine 63 encrypts the coupon data related to the coupon ID data using the coupon ID data and terminal ID data as encryption keys and transmits the encrypted coupon data to the mobile phone 40 through the management-side communication interface 62.

When the user uses coupon data at a shop to redeem it, the verification section 64 receives the coupon ID data and terminal ID data from the redemption device 70 and verifies the received coupon ID data and terminal ID data against the coupon ID data and terminal ID data in effect when the user acquired the coupon data, i.e., against the coupon ID data and terminal ID data transmitted to the coupon management device 60 by the user in order to acquire the coupon data. When the coupon ID data and terminal ID data transmitted from the mobile phone device 40 are found to match the coupon ID data and terminal ID data sent from the redemption device 70, the verification section 64 transmits redemption data to the redemption device 70 through the management-side communication interface 62, the redemption data being arranged to redeem the coupon illustratively for a price discount and then nullify the coupon.

As shown in FIG. 7, the redemption device 70 is a device that has the functionality of a POS (Point Of Sale terminal) set up at a shop selling products. As such, the redemption device 70 includes a non-contact communication OS section 71 as the means for managing non-contact communications over short or near distances such as RFID or NFC, and a redemption-side non-contact communication interface 72 for communicating with the terminal-side non-contact communication interface 47 of the mobile phone device 40.

When purchasing a product to which the coupon can be applied, the user may hold the terminal-side non-contact communication interface 47 of the mobile phone device 40 over the redemption-side non-contact communication interface 72. This causes the redemption-side non-contact communication interface 72 to communicate with the terminal-side non-contact communication interface 47 of the mobile phone device 40 illustratively to receive the coupon ID data, terminal ID data, encrypted coupon data, etc., transmitted from the mobile phone device 40.

The redemption device 70 includes a system OS section 73 that manages the redemption device 70 as a whole, a decryption engine 74 that decrypts distributed coupon data that has been encrypted, and a non-secure memory 75 that doubles as a system memory. Upon receipt of encrypted coupon data transmitted from the mobile phone device 40 through the redemption-side non-contact communication interface 72, the decryption engine 74 decrypts the encrypted coupon data placed in the non-secure memory 75 using the coupon ID data and terminal ID data which were received along with the encrypted coupon data.

Furthermore, the redemption device 70 includes a POS function section 76 that implements the functionality of a POS terminal, a display section 77 that displays operation status and the like, and a redemption-side communication interface 78 that communicates with the coupon management device 60 or with the coupon ID management device 10.

The POS function section 76 is furnished typically with a reader to read optically a bar code or the like attached illustratively to a product. When reading the bar code from a product, the POS function section 76 displays the name and price of the product on the display section 77. When the encrypted coupon data transmitted from the mobile phone device 40 is decrypted, the POS function section 76 also displays the decrypted coupon data, i.e., product name, discount rate and other specifics of the coupon data on the display section 77.

Meanwhile, many business transactions involving products are conducted today over networks such as the Internet. That means products may be bought or sold using the coupon ID data and terminal ID data held in the mobile phone device 40. For this reason, the data processing system 1 of the present invention further includes an electronic commerce device 80 that implements electronic commerce. As shown in FIG. 8, the electronic commerce device 80 includes an electronic commerce section 81 which provides product information to numerous devices including the mobile phone device 40 connected to networks such as the Internet and which receives payment information about the product selected by the user and other information, and a communication interface 82 that communicates with the mobile phone device 40 or with the coupon management device 60.

When the mobile phone device 40 having obtained coupon ID data accesses the electronic commerce device 80 to purchase a product using the coupon, the communication interface 82 receives from the mobile phone device 40 the coupon ID data and terminal ID data along with order data, and transmits the coupon ID data and terminal ID data to the coupon management device 60 so as to verify the coupon ID data. When the coupon ID data is verified by the coupon management device 60, the communication interface 82 receives unencrypted coupon data transmitted from the coupon management device 60. The electronic commerce section 81 then settles the payment using the coupon.

Described below in reference to FIG. 9 is a procedure performed by the data processing system 1 to which the present invention is applied.

Initially, the advertising agency commissioned to create an advertisement from an advertiser designs advertisement video data, and creates coupon data by determining the specifics of the coupon (e.g., discount rate) to be distributed along with the advertisement video data. The coupon data thus created for each coupon is furnished with coupon ID data. In step S1, the coupon ID management device 10 relates the coupon ID data to the coupon data and registers the related data with the coupon ID database established on the coupon ID database 11.

Next, after creating the advertisement video data based on the request from the advertiser, the advertising agency prepares distribution information about the created advertisement video data, i.e., a schedule specifying the times and places at which to distribute the advertisement video data, and inputs the distribution information thus prepared to the advertisement video data creation device 20 in relation to the advertisement video data. In step S2, the distribution information input section 13 of the coupon ID management device 10 admits the distribution information related to the coupon ID data from the advertisement video data creation device 20. The distribution information is registered with the coupon ID database in relation to the coupon ID data.

In step S3, before actual distribution of the advertisement video data is started, the coupon management device 60 is supplied by the coupon ID database of the coupon ID management device 10 with the coupon ID data and the coupon data in relation to one another over the network or using recording media; the supplied coupon ID data and coupon data are registered with the coupon database of the coupon ID database 61.

As explained, steps S1 through S3 constitute the process carried out before coupon distribution is started, i.e., before the distribution of the advertisement video data is started. Once the distribution of the advertisement video data is started, the user may stop in front of the display device 30 reproducing the advertisement video data, and may take a image embedded with the coupon ID as a watermark out of the screen currently reproducing the advertisement video data, using the image pickup section 41 of the mobile phone device 40. When acquiring the coupon, the user accesses the coupon management device 60 and transmits to the device 60 the coupon ID data and terminal ID data together with such attribute information as the telephone number, user name, age, gender, and questionnaire information. In step S4, the coupon management device 60 receives the coupon ID data, terminal ID data, and attribution information transmitted from the user's mobile phone device 40 and registers the received data as well as the date, time, etc., of coupon acquisition determined by an internal timer or the like with the coupon database established on the coupon ID database 61. The place of coupon acquisition is determined by the coupon ID data indicating from which display device 30 the coupon was acquired.

The coupon management device 60 transmits the registered contents of the coupon database to the coupon ID management device 10 periodically or as needed. In step S5, upon input of the registered contents of the coupon database through the redemption log input section 14, the coupon ID management device 10 registers the input contents with the coupon ID database established on the coupon ID database 11.

When purchasing the product from which the coupon ID data has bee acquired, the user transmits the coupon ID data and terminal ID data from the terminal-side non-contact communication interface 47 of the mobile phone device 40 to at least the redemption-side non-contact communication interface 72 of the redemption device 70. Where electronic commerce is to be conducted, the mobile phone device 40 transmits at least the coupon ID data and terminal ID data through the terminal-side communication interface 49 to the electronic commerce device 80. The redemption device 70 or the electronic commerce device 80 transmits to the coupon management device 60 the coupon ID data and terminal ID data received from the mobile phone device 40 for redemption processing involving verification and other processes. Based on the date and time at which the coupon ID data and terminal ID data were received and on the ID data of the place where the redemption device 70 is set up, the coupon management device 60 or the electronic commerce device 80 registers the date, time, and place of coupon use with the coupon database for use as a redemption log.

In the coupon ID management device 10, the date, time, and place of coupon use transmitted from the redemption device 70 or from the coupon management device 60 are written as a redemption log to the coupon ID database established on the coupon ID database 11. This redemption log, which reveals when and where the issued coupon was acquired and used, can be presented to the advertiser as advertisement measurement information indicating the effects of advertisement. Alternatively, the redemption logs stored on the coupon database of the coupon management device 60 may be presented to the advertiser as the advertisement measurement information.

Explained below in reference to FIG. 10 is a series of steps in which the user acquires coupon ID data from the display device 30 using the mobile phone device 40. That is, these are the steps constituting the process (i) shown before step S4 in FIG. 9.

The display device 30 currently reproduces the advertisement video data embedded with the coupon ID data as a watermark. In this state, the user takes an image of the display on the display device 30 using the image pickup section 41 of the mobile phone device 40, the taken image being aimed at the domain of the display where the coupon ID data is embedded as the watermark inside the frame 36 for alignment of the displayed advertisement video data. Then the watermark extraction section 42 aligns the captured image data with respect to the captured frame 36 by correcting size, inclination, and distortion from slantwise image pickup and by aligning the macro block where the coupon ID data was embedded by the image processing device 23 in the advertisement video data upon encoding, with the macro block of the image data captured by the image pickup section 41, before extracting the coupon ID data from the high-frequency component of the so-called DCT coefficient obtained upon encoding and further carrying out error correction processing, whereby the coupon ID data 91 is extracted.

When the video content of advertisement is distributed uncompressed as a digital signal, the above-mentioned frame 36 is used to perform correction processing for alignment. Thereafter, each sampled value of the image signal, i.e., the least significant bit or a few bits down to the LSB of each of the pixels involved are extracted, and error correction processing is carried out, whereby the coupon ID data 91 is extracted.

Furthermore, where the advertisement video data is in analog form, a graphic image composed of numerals and symbols constituting overlaid or superimposed coupon ID data 91 is extracted through a character recognition process. The coupon ID data 91 is then extracted from the extracted graphic image.

The mobile phone device 40 stores the coupon ID data 91 thus obtained into the secure memory 48 where the terminal ID data 92 is retained.

Explained below in reference to FIG. 11 is a series of steps in which the user acquires the coupon data related to coupon ID data using the mobile phone device 40. That is, these are the steps constituting the process (ii) shown after step S4 in FIG. 9.

First, the mobile phone device 40 reads the coupon ID data and terminal ID data from the secure memory 48 and transmits the retrieved data to the management-side communication interface 62 of the coupon management device 60 through the terminal-side communication interface 49. At this point, the mobile phone device 40 also transmits attribute information to the coupon management device 60.

In turn, the coupon management device 60 accesses the coupon database, registers the terminal ID data 92 with the coupon database in relation to the received coupon data 93, and reads coupon data 93a related to the coupon ID data. In the coupon management device 60, the encryption engine 63 encrypts the coupon data 93a using the coupon ID data 91 and terminal ID data 92. Then the coupon management device 60 transmits the encrypted coupon data 93b through the management-side communication interface 62 to the mobile phone device 40 that transmitted the coupon ID data 91 and terminal ID data 92. In turn, the mobile phone device 40 stores into the non-secure memory 45 the encrypted coupon data 93b received through the terminal-side communication interface 49.

In this manner, the user can acquire the encrypted coupon data 93 in the mobile phone device 40; the coupon data may be used when a product is purchased next time. At this point, the mobile phone device 40 stores the coupon data 93 in the non-secure memory 45 that has a relatively large capacity. The coupon data 93, having been encrypted, is protected against unlawful use.

Explained below in reference to FIG. 12 is a first example of redemption in which the user having acquired the coupon data 93 uses the coupon.

The first example of redemption, as shown in FIG. 12, is characterized by this: that the encrypted coupon data 93b held in the non-secure memory 45 and the coupon ID data 91 and terminal ID data 92 retained in the secure memory 48 are transmitted from the mobile phone device 40 to the redemption device 70, and that the redemption device 70 decrypts the encrypted coupon data 93b into unencrypted coupon data 93a which can then be redeemed.

That is, when visiting a shop to purchase a desired product for which the coupon ID data 91 has been acquired, the user first holds the terminal-side non-contact communication interface 47 of the mobile phone device 40 over the redemption-side non-contact communication interface 72 of the redemption device 70. This causes the redemption device 70 to read the encrypted coupon data 93b from the non-secure memory 45 of the mobile phone device 40 and places the retrieved data into the non-secure memory 75. At the same time, the redemption device 70 reads the coupon ID data 91 and terminal ID data 92 from the secure memory 48 of the mobile phone device 40. The redemption device 70 causes the decryption engine 74 to decrypt the encrypted coupon data 93b in the non-secure memory 75 using the coupon ID data 91 and terminal ID data 92, and displays the unencrypted coupon data 93a on the display section 77. This allows a clerk at the shop to check the specifics of the coupon data 93, with the payment settled by the POS function section 76 applying the discount rate or other specifics of the coupon data 93.

In this example, the redemption device 70 transmits a redemption log to the coupon ID management device 10 and to the coupon management device 60.

Further explained below in reference to FIG. 13 is a second example of redemption in which the user having acquired the coupon data 93 uses the coupon.

The second example of redemption, as shown in FIG. 13, is characterized by this: that the mobile phone device 40 decrypts the encrypted coupon data 93b held in the non-secure memory 45 into the unencrypted coupon data 93a using the coupon ID data 91 and terminal ID data 92 retained in the secure memory 48, so that the coupon data can be redeemed.

That is, when the user visits a shop to purchase a desired product for which the coupon ID data 91 has been acquired, the mobile phone device 40 reads the coupon ID data 91 and terminal ID data 92 from the secure memory 48, causes the decryption engine 44 to decrypt the encrypted coupon data 93b held in the non-secure memory 45, and displays the unencrypted coupon data 93a on the display device 50. This allows a clerk at the shop to check visually the specifics of the coupon data, with the payment settled by the POS function section 76 applying the discount rate or other specifics of the coupon data 93a.

In this example, the redemption device 70 transmits a redemption log to the coupon ID management device 10 and to the coupon management device 60.

A third example of redemption shown next in FIG. 14 is characterized by this: after the coupon ID data is acquired from the display device 30, the coupon management device 60 is not accessed immediately to acquire the encrypted coupon data 93b; instead, the coupon management device 60 is accessed via the redemption device 70 at the time of redemption.

That is, when visiting a shop to purchase a desired product for which the coupon ID data 91 has been acquired, the user first holds the terminal-side non-contact communication interface 47 of the mobile phone device 40 over the redemption-side non-contact communication interface 72 of the redemption device 70. This causes the redemption device 70 to read the coupon ID data 91 and terminal ID data 92 from the secure memory 48 of the mobile phone device 40. The redemption device 70 transfers the coupon ID data 91 and terminal ID data 92 acquired from the mobile phone device 40 to the coupon management device 60 through the redemption-side communication interface 78.

Here, upon receiving the transferred coupon ID data 91 and terminal ID data 92 through the management-side communication interface 62, the coupon management device 60 causes the verification section 64 to verify the coupon ID data 91 out of the coupon ID data 91 and terminal ID data 92 acquired from the mobile phone device 40 against the coupon database established on the coupon ID database 61 to see if the coupon ID data 91 is registered with the database and corresponds to a distributed coupon. When the coupon ID data 91 is found verified, the coupon management device 60 registers the terminal ID data 92 with the coupon database. Thereafter, the coupon management device 60 transmits the unencrypted coupon data 93a related to the coupon ID data to the redemption device 70 through the management-side communication interface 62.
The redemption device 70 displays on the display section 77 the coupon data 93a received through the redemption-side communication interface 78. This allows a clerk at the shop to check the specifics of the coupon data 93, with the payment settled by the POS function section 76 applying the discount rate or other specifics of the coupon data 93a.

At the same time, the coupon management device 60 creates redemption data 94 that redeems the coupon data related to the coupon ID data 91 transmitted from the mobile phone device 40, and transmits the redemption data 94 to the mobile phone device 40 via the redemption device 70. That is, upon receipt of the redemption data 94 transmitted from the management-side communication interface 62 of the coupon management device 60 through the redemption-side communication interface 78, the redemption device 70 transmits the received redemption data 94 to the terminal-side non-contact communication interface 47 of the mobile phone device 40 through the redemption-side non-contact communication interface 72. The mobile phone device 40 stores into the secure memory 48 the redemption data transmitted from the coupon management device 60 via the redemption device 70, and nullifies the coupon ID data 91 to prevent duplicate use by unscrupulous parties.

In the third example of redemption, the coupon data is not acquired by the mobile phone device 40 accessing the coupon management device 60. That means the user can save on the communication cost of the mobile phone device 40. And the redemption device 70 transmits a redemption log to the coupon ID management device 10 and to the coupon management device 60.

Compared with the third example of redemption, a fourth example of redemption shown next in FIG. 15 is characterized by this: that coupon data is transmitted from the coupon management device 60 to the redemption device 70 in the form of the encrypted coupon data 93b; the coupon data is encrypted when transmitted from the coupon management device 60 to the redemption device 70 so as to enhance data security therebetween.

That is, when visiting a shop to purchase a desired product for which the coupon ID data 91 has been acquired, the user holds the terminal-side non-contact communication interface 47 of the mobile phone device 40 over the redemption-side non-contact communication interface 72 of the redemption device 70. This causes the redemption device 70 to read the coupon ID data 91 and terminal ID data 92 from the secure memory 48 of the mobile phone device 40. And the redemption device 70 transfers the coupon ID data 91 and terminal ID data 92 acquired from the mobile phone device 40 to the coupon management device 60 through the redemption-side communication interface 78.

Here, upon receiving the transferred coupon ID data 91 and terminal ID data 92 through the management-side communication interface 62, the coupon management device 60 causes the verification section 64 to verify the coupon ID data 91 out of the coupon ID data 91 and terminal ID data 92 acquired from the mobile phone device 40 against the coupon database established on the coupon ID database 61 to see if the coupon ID data 91 is registered with the database and corresponds to a distributed coupon. When the coupon ID data 91 is found verified, the coupon management device 60 registers the terminal ID data 92 with the coupon database. Thereafter, the coupon management device 60 causes the encryption engine 63 to encrypt the unencrypted coupon data 93a related to the coupon ID data using the coupon ID data 91 and terminal ID data 92, and transmits the encrypted coupon data 93b to the redemption device 70 through the management-side communication interface 62. Upon receipt of the encrypted coupon data 93b through the redemption-side communication interface 78, the redemption device 70 causes the decryption engine 74 to decrypt the encrypted coupon data 93b using the coupon ID data 91 and terminal ID data 92 transferred earlier to the coupon management device 60, and displays the unencrypted coupon data 93a on the display section 77. This allows a clerk at the shop to check the specifics of the coupon data 93a, with the payment settled by the POS function section 76 applying the discount rate or other specifics of the coupon data 93a.

At the same time, the coupon management device 60 creates redemption data that redeems the coupon data related to the coupon ID data 91 transmitted from the mobile phone device 40, and transmits the redemption data 94 to the mobile phone device 40 via the redemption device 70. That is, upon receipt of the redemption data 94 transmitted from the management-side communication interface 62 of the coupon management device 60 through the redemption-side communication interface 78, the redemption device 70 transmits the received redemption data 94 to the terminal-side non-contact communication interface 47 of the mobile phone device 40 through the redemption-side non-contact communication interface 72. And the mobile phone device 40 stores into the secure memory 48 the redemption data 94 transmitted from the coupon management device 60 via the redemption device 70, and nullifies the coupon ID data 91 to prevent duplicate use by unscrupulous parties.

In the fourth example of redemption, the coupon data 93 is not acquired by the mobile phone device 40 accessing the coupon management device 60. The user can thus save on the communication cost of the mobile phone device 40. Also, the exchange of coupon data between the coupon management device 60 and the redemption device 70 can be accomplished securely. And the redemption device 70 transmits a redemption log to the coupon ID management device 10 and to the coupon management device 60.

A fifth example of redemption shown next in FIG. 16 is characterized by this: that the coupon ID data 91 and terminal ID data 92 stored in the secure memory 48 of the mobile phone device 40 are transmitted to the coupon management device 60 via the electronic commerce device 80, and that the coupon management device 60 transmits the coupon data 93a to the electronic commerce device 80 to redeem the coupon data.

That is, when the user accesses a shop using the mobile phone device 40 to purchase a desired product for which the coupon ID data 91 has been acquired, the mobile phone device 40 reads the coupon ID data 91 and terminal ID data 92 from the secure memory 48, transmits the retrieved coupon ID data 91 and terminal ID data 92 along with order data to the electronic commerce device 80 through the terminal-side communication interface 49.
Upon receipt of the coupon ID data 91 and terminal ID data 92 through the communication interface 82, the electronic commerce device 80 transfers the received data to the coupon management device 60 so as to acquire the coupon data 93a.

When receiving the coupon ID data 91 and terminal ID data 92 from the electronic commerce device 80 through the management-side communication interface 62, the coupon management device 60 causes the verification section 64 to verify the coupon ID data 91 out of the coupon ID data 91 and terminal ID data 92 acquired from the mobile phone device 40 against the coupon database established on the coupon ID database 61 to see if the coupon ID data 91 is registered with the database and corresponds to a distributed coupon. When the coupon ID data 91 is found verified, the coupon management device 60 registers the terminal ID data 92 with the coupon database. Thereafter, the coupon management device 60 transmits the unencrypted coupon data 93a related to the coupon ID data to the electronic commerce device 80 through the management-side communication interface 62. The electronic commerce device 80 can then check the specifics of the coupon data 93a and settle the payment by applying the discount rate or other specifics of the coupon data 93a. And the electronic commerce device 80 transmits a redemption log to the coupon ID management device 10 and to the coupon management device 60.

Alternatively in the fifth example of redemption, the coupon data may be encrypted by the encryption engine 63 of the coupon management device 60, and the encrypted coupon data may be transmitted to the electronic commerce device 80. The decryption engine of the electronic commerce device 80 may then decrypt the encrypted coupon data for redemption.

In the above-described data processing system 1, the display device 30 reproduces the advertisement video data embedded with the coupon ID data as a watermark in order to distribute coupon ID data. This means the display device 30 can be an ordinary display device. And the mobile phone device 40, after acquiring the coupon ID data embedded as the watermark in the advertisement video data, stores the coupon ID data into the secure memory 48 to prevent unlawful copying or distribution. Furthermore, the data processing system 1 keeps the coupon ID data and the terminal ID data related to one another, which makes it possible to distribute and redeem the electronic coupons that can only be used by the mobile phone device 40 of the user who has viewed the advertisement video data. In addition, the coupon ID management device 10 and coupon management device 60 manage the redemption logs in relation to the coupon ID data. This makes it possible to identify the attributes of advertisement viewers and thereby to implement a highly reliable method for measuring the effects of advertisement and publicity.

The terminal ID data explained above may be the ID data assigned uniquely to each mobile phone device 40. Alternatively, the terminal ID data may be the ID data of an IC card used by an IC card system.

The examples explained above were shown using techniques for embedding watermarks in compressed or uncompressed images. Alternatively, other methods, processes or techniques for otherwise embedding watermarks may be adopted.

Also, the examples explained above were shown having the coupon ID data embedded in the advertisement video data as the watermark. Alternatively, the coupon ID data may be embedded in audio data which is reproduced in synchronism with the advertisement image data on the display device 30 and which is output through speakers. In this case, the coupon ID data will be multiplexed in the audio signal in such a manner that the coupon ID data will not affect the audio signal through the masking effect on the frequency axis and time axis of the audio signal. That is, the coupon ID data will be multiplexed in a manner not perceived by the human's auditory sense. And the mobile phone device 40 may utilize an internal electroacoustic transducer such as a microphone to pick up the audio signal from the advertisement video data reproduced by the display device 30, and may extract the watermark from a specific domain of the frequency axis or time axis of the signal where the watermark is embedded in the audio signal.

Also, the examples explained above have shown the advertisement video data reproduced on the display device 30. Alternatively, paper-based posters or electronic posters may be used as the media for implementing the advertisement embedded with watermarks.

## Claims

1. A data processing system comprising:
advertising media for providing advertisement data in which coupon ID data attached to each of coupons is embedded as a watermark;
a terminal device including acquisition means for acquiring the advertisement data provided by said advertising media, extraction means for extracting the coupon ID data from the advertisement data acquired by said acquisition means, secure storage means for storing terminal ID data as well as the coupon ID data extracted by said extraction means, terminal-side communication means for transmitting the coupon ID data and the terminal ID data held in said secure storage means, and terminal-side noncontact communication means for transmitting the coupon ID data and the terminal ID data held in said secure storage means;
a redemption device including redemption-side non-contact communication means for receiving the coupon ID data and the terminal ID data transmitted from the terminal-side noncontact communication means of said terminal device, and redemption-side communication means for transmitting a log in effect when any of the coupons related to said coupon ID data is redeemed, whereby the coupons related to said coupon ID data are redeemed; and
a coupon management device including a coupon database for managing said coupons in relation to said coupon ID data, and management-side communication means for receiving the redemption logs transmitted from said redemption device so as to manage the received logs using said coupon database.

2. The data processing system according to claim 1, wherein
said coupon management device includes reception means for receiving the coupon ID data and the terminal ID data transmitted from said terminal-side communication means, encryption means for encrypting coupon data related to the coupon ID data using the coupon ID data and the terminal ID data received by said reception means, and transmission means for transmitting the encrypted coupon data derived from encryption by said encryption means said terminal device, and
said terminal device stores the encrypted coupon data received by said communications means into non-secure storage means.

3. The data processing system according to claim 2, wherein
said redemption device includes decryption means for decrypting said encrypted coupon data using the coupon ID data and the terminal ID data transmitted from the terminal-side noncontact communication means of said terminal device, and
said redemption-side noncontact communication means receives said encrypted coupon data as well as the coupon ID data and the terminal ID data transmitted from the terminal-side noncontact communication means of said terminal device, and decrypts said encrypted coupon data using said coupon ID data and said terminal ID data so as to redeem said coupons.

4. The data processing system according to claim 2,
wherein said terminal device includes decryption means for decrypting said encrypted coupon data using the coupon ID data and the terminal ID data held in said secure storage means, and display means for displaying decrypted coupon data, said terminal device displaying the decrypted coupon data on said display means so as to let said coupons be redeemed by said redemption device.

5. The data processing system according to claim 1, wherein
said terminal device transmits the coupon ID data and the terminal ID data held in said secure storage means from the terminal-side noncontact communication means of said terminal device to the redemption-side non-contact communication means of said redemption device,
said redemption device transmits said coupon ID data and said terminal ID data from said redemption-side communication means to said coupon management device, and
said coupon management device uses verification means to verify said coupon ID data and, when said coupon ID data is verified, transmits the coupon data related to the coupon ID data from said management-side communication means to said redemption device while transmitting redemption data indicating that the coupon data related to the coupon ID data has been redeemed to said terminal device via said redemption device.

6. The data processing system according to claim 1, wherein
said terminal device transmits the coupon ID data and the terminal ID data held in said secure storage means from the terminal-side noncontact communication means of said terminal device to the redemption-side non-contact communication means of said redemption device,
said redemption device transmits said coupon ID data and said terminal ID data from said redemption-side communication means to said coupon management means,
said coupon management device uses verification means to verify said coupon ID data and, when said coupon ID data is verified, uses encryption means to encrypt the coupon data related to the coupon ID data using said coupon ID data and said terminal ID data, before transmitting the encrypted coupon data from said management-side communication means to said redemption device,
said redemption device decrypts said encrypted coupon data using said coupon ID data and said terminal ID data, and
said coupon management device transmits redemption data indicating that the coupon data related to the coupon ID data has been redeemed to said terminal device via said redemption device.

7. The data processing system according to claim 1, further comprising
an electronic commerce device,
wherein, when placing an order for a product with said electronic commerce device, said terminal device transmits the coupon ID data and the terminal ID data held in said secure storage means from said terminal-side communication means to said electronic commerce device,
said electronic commerce device transmits said coupon ID data and said terminal ID data to said coupon management device, and
said coupon management device uses verification means to verify said coupon ID data and, when said coupon ID data is verified, transmits the coupon data related to the coupon ID data from said management-side communication means to said electronic commerce device.

8. A data processing method comprising the steps of:
using advertising media to provide advertisement data in which coupon ID data attached to each of coupons is embedded as a watermark;
causing a terminal device to acquire the advertisement data provided by said advertising media, to extract the coupon ID data from the acquired advertisement data, and to store the extracted coupon ID data into secure storage means which holds terminal ID data;
receiving the coupon ID data and the terminal ID data transmitted from said terminal device, identifying the coupons related to the coupon ID data, and transmitting to a coupon management device a log in effect when any of the coupons related to said coupon ID data is redeemed; and
causing said coupon management device to manage the terminal ID data and the redemption logs in relation to said coupon ID data.
